Europäisches Patentamt

(19) European Patent Office

Office européen des brevets

(11) Numéro de publication: **0 269 476**
**A1**

## (12) DEMANDE DE BREVET EUROPEEN

(21) Numéro de dépôt: 87402338.5

(22) Date de dépôt: 20.10.87

(51) Int. Cl.⁴: **B 29 C 65/08**
**B 65 D 85/32**

(30) Priorité: 20.10.86 FR 8614521
20.10.86 FR 8614522

(43) Date de publication de la demande:
01.06.88 Bulletin 88/22

(84) Etats contractants désignés:
**BE DE ES FR GB IT**

(71) Demandeur: **I.C.C. SA**
**9, rue Septentrion**
**F-27100 Val-de-Reuil (FR)**

(72) Inventeur: **Calilvrousis, Georges**
**62, route de Lombardie**
**F-76160 Darnetal (FR)**

**Philippart, Gérard**
**68, rue de l'Andelle**
**F-27460 Alizay (FR)**

(74) Mandataire: **Hasenrader, Hubert et al**
**Cabinet BEAU DE LOMENIE 55, rue d'Amsterdam**
**F-75008 Paris (FR)**

(54) **Procédé et dispositif d'assemblage par ultrasons.**

(57) Procédé et dispositif d'assemblage entre eux d'une matière thermoplastique et d'un matériau du type cellulosique, comme du carton, du bois, du papier, des matières textiles tissées ou non-tissées ou des produits analogues.

Ils sont caractérisés par une application des techniques de soudage par ultrasons telle que l'on provoque non seulement un ramollissement de la matière thermoplastique ( ) à assembler mais également une migration de ladite matière dans au moins certaines zones du matériau cellulosique ( ) destiné à être réuni à ladite matière thermoplastique.

Application : fabrication d'emballages, notamment emballages pour oeufs et produits analogues ; présentoirs d'échantillons, etc ...

fig.1

EP 0 269 476 A1

**Description**

## Procédé et dispositif d'assemblage par ultrasons.

L'invention a pour objet un procédé et un dispositif d'assemblage par ultrasons.

On connaît déjà, dans de nombreuses réalisations, des installations de soudage à l'aide d'ultrasons qui comprennent, généralement, un générateur d'ultrasons, un convertisseur à céramiques piézo et un modificateur d'amplitude ou "booster" relié à une sonotrode laquelle est propre à coopérer avec une enclume. Les matériaux soudés à l'aide de telles installations sont des matières thermoplastiques comme par exemple des polyéthylènes ou des polypropylènes en ce qui concerne les matières thermoplastiques prtiellement cristallines ou des méthacrylates, des polycarbonates ou du chlorure de polyvinyle dans le cas des matières thermoplastiques amorphes. Les matières plastiques partiellement cristallines ne peuvent être parfaitement soudées qu'avec elles-mêmes, de sorte qu'un polyéthylène basse pression ne peut pas être effectivement soudé par ultrasons à un polyéthylène haute pression ; des difficultés analogues se rencontrent dans le cas de matières thermoplastiques amorphes de sorte que les techniques de soudage par ultrasons ne sont utilisées que dans certains domaines où leur emploi est parfaitement connu.

Cependant, en raison de l'avantage que procure le soudage par ultrasons, lorsqu'il peut être mis en oeuvre, des travaux ont été poursuivis par la Demanderesse dans le but d'assembler entre elles par cette technique des pièces ou parties de pièces en matériaux différents et, en tout cas, du type de ceux considérés jusqu'à ce jour comme ne pouvant pas être réunis entre eux par soudage par ultrasons.

A la suite de ces travaux, la Demanderesse a maintenant trouvé, de manière surprenante, qu'il était possible, dans certaines conditions, d'obtenir l'assemblage satisfaisant d'un matériau thermoplastique et d'un autre matériau du type cellulosique, comme du carton, du bois, du papier, des matières textiles tissées ou non tissées ou des produits analogues, en mettant en oeuvre les techniques de soudage par ultrasons de manière telle que l'on provoque non seulement un ramollissement de la matière thermoplastique à assembler mais également une migration de ladite matière dans au moins certaines zones du matériau cellulosique destiné à être réuni à ladite matière thermoplastique.

Sans qu'on puisse donner d'explication théorique entièrement satisfaisante du phénomène, on pense que cette migration de la matière thermoplastique résulte d'un fluage qui la fait pénétrer, dans le cas d'un carton, à l'intérieur des espaces que ménagent les fibres constitutives dudit carton.

Pour la mise en oeuvre du procédé on détermine la fréquence des ultrasons appliqués, la géométrie de la sonotrode et l'amplitude de vibrations de manière à obtenir le ramollissement de la matière thermoplastique sans provoquer, toutefois, de dégradation comme une "brûlure" de ladite matière et/ou du matériau cellulosique dont le procédé permet l'assemblage.

En outre, et pour l'obtention d'un assemblage satisfaisant, l'invention prévoit aussi un réglage adéquat des paramètres que constituent la force d'appui de la sonotrode, le temps d'émission des ultrasons, ainsi que le temps et la force d'appui de la sonotrode après l'émission desdits ultrasons.

On détermine ainsi, en fonction de la matière thermoplastique à assembler, de l'épaisseur de ladite matière et de celle du matériau cellulosique, la quantité d'énergie suffisante pour approcher la température de fusion ou de ramollissement de la matière thermoplastique sur une surface d'aire déterminée, cet apport d'énergie étant en outre calculé pour complémentairement, compenser les pertes par absorption et conduction des zones en matériau cellulosique, de l'enclume et des parties mécaniques attenantes.

Le choix des paramètres et à la portée de l'homme de l'art, lequel les détermine en tenant compte du fait que l'énergie totale (E) exprimée en joule est le produit de la puissance (P), en watt, par le temps d'application en seconde :

$$\text{c'est-à-dire : (E) joule} = \int_{0}^{t} P.dt$$

Dans un mode d'exécution préféré du procédé, la fréquence du générateur à ultrasons est comprise entre 20 et 40 kHz, l'amplitude de vibrations entre 20 et 50 $\mu$ , le temps d'émission des ultrasons étant compris entre 0,2 et 1 seconde avec une force d'appui de la sonotrode inférieure à 50 kg/cm$^2$.

Dans ce mode d'exécution préféré, également, le temps d'appui de la sonotrode après émission des ultrasons sur les matériaux à assembler entre eux est avantageusement compris entre 0,3 et 0,6 seconde.

Dans un mode d'exécution du procédé, la sonotrode est au contact de la matière thermoplastique et l'enclume au contact du matériau cellulosique.

Dans un autre mode d'exécution du procédé, la sonotrode est au contact du matériau cellulosique et l'enclume au contact de la matière thermoplastique.

Le procédé selon l'invention peut également être mis en oeuvre pour l'assemblage entre eux d'une matière thermoplastique et d'un matériau cellulosique accolés suivant une pluralité de feuilles ou films, par exemple sous forme d'un matériau cellulosique comme du carton interposé entre deux feuilles de matière thermoplastique ou, inversement, sous forme d'une ou plusieurs feuilles de matière thermoplastique interposées entre deux feuilles de carton ou analogue, le procédé étant alors particulièrement bien approprié pour la fabrication d'emballages du type des "blister" ou du type des sachets munis d'un cavalier de carton pour leur présentation sur le lieu de vente ou de consommation.

Le procédé de l'invention trouve application pour la solidarisation de feuilles, films ou analogues de matière thermoplastique ou de complexes comportant une telle matière avec des matériaux cellulosiques comme du bois moulé, du bois déroulé, des produits à base de cellulose moulée, des produits du type des compounds cellulose/plastique, des textiles à base de tels matériaux cellulosiques ou incorporant de type de matériaux en mélange avec des fibres synthétiques, des produits "non-tissés" à base de tels matériaux ou incorporant de tels matériaux.

Un dispositif pour la mise en oeuvre du procédé comprend alors une sonotrode et/ou une enclume de forme(s) appropriée(s) pour favoriser la migration de la matière thermoplastique ramollie dans certaines zones du matériau cellulosique.

Dans un mode de réalisation, l'enclume et/ou la sonotrode comporte(nt) des stries rectilignes, transversales ou pyramidales, mais dont les sommets ou pointes sont tronqués afin d'augmenter la surface de contact de l'enclume et/ou de la sonotrode avec les matières à assembler entre elles, une telle disposition favorisant en outre l'obtention d'une bonne résistance à l'arrachement et au cisaillement en raison des "reliefs" créés à l'interface de la matière thermoplastique et du matériau cellulosique.

L'absence d'angles vifs permet d'éviter des amorces de rupture et/ou de perforation de la matière thermoplastique en feuille ou film.

L'invention a également pour objet les assemblages obtenus par mise en oeuvre du procédé et/ou utilisation d'un dispositif selon l'invention, notamment des emballages ou parties d'emballages comportant un ou des feuilles ou films de matière thermoplastique avec un ou des constituants en matériau cellulosique, comme un cavalier en carton pour un sachet ou des présentoirs d'échantillons comportant un ou plusieurs matériau(x) du type tissé ou non-tissé solidarisé avec une ou des plaques de matériau cellulosique comme du carton, ou encore des emballages du type "blister" ou des emballages avec ruban en matière textile ou en carton, lequel accroît l'aspect attractif du produit, d'une part, et peut être utilisé, d'autre part, pour servir de témoin d'inviolabilité, au voisinage de la ligne d'assemblage, compte tenu du fait que la séparation de la matière thermoplastique et du matériau cellulosique ne peut pas être obtenue sans laisser de graces visibles de la rupture de l'emballage.

L'invention a également pour objet un emballage perfectionné, notamment pour les oeufs ou produits analogues, et une machine pour la fabrication de cet emballage.

On connaît déjà, dans de nombreuses réalisations, des emballages pour oeufs, fruits, ou produits analogues du type comportant une première partie ou embase munie d'alvéoles de réception des produits et un couvercle rendu solidaire de l'embase après que celle-ci ait été granie desdits produits pour former un emballage clos.

La première partie, ou embase, quelque peu en forme de barquette, peut être réalisée par moulage de pulpe de papier ou par formage de matière plastique et le couvercle peut lui aussi être réalisé en les mêmes matériaux. Comme montré, par exemple dans EP-A3-0 085 559 ou EP-A3-0 079 757 ou EP-A3-0 087 306, on a déjà proposé diverses solutions pour la solidarisation de l'embase et du couvercle qui font toutes applications de découpes de formes conjuguées sur les parties constitutives de l'emballage de sorte qu'il en résulte, pour la fabrication de celui-ci, à la fois des coûts relativement importants et des difficultés de mise en oeuvre (si l'on sait que les moyens de formes conjuguées sont fréquemment du type à crochet et donc relativement fragiles) en particulier lorsqu'ils sont utilisés dans des machines de conditionnement à cadence élevée, telles que celles actuellement mises en oeuvre dans les centres de conditionnement d'oeufs et dont le débit peut être de l'ordre de plusieurs milliers d'oeufs à l'heure.

La mise en oeuvre du procédé selon l'invention permet de s'affranchir de ces difficultés d'une part, et de satisfaire aux conditions énoncées ci-dessus tout en maintenant à une faible ou très faible valeur le coût de l'emballage envisagé, d'autre part.

Un tel emballage peut alors être réalisé en des matériaux les plus divers, aussi bien pour l'embase que pour le couvercle, comme par exemple des matières thermoplastiques et/ou des stratifiés et/ou des complexes à base de telles matières, d'une part et, d'autre part, des matériaux à base de cellulose, comme de la pulpe de bois, des compounds cellulose/plastique du carton (ordinaire ou micro cannelé) etc ...

En outre, la mise en oeuvre de techniques analogues à celles du soudage par ultrasons conduit à des machines de conditionnement dont les outils ou parties opératoires sont froids, n'émettent pas de rayonnement et par conséquent n'apportent pas de chaleur au voisinage des produits à emballer, ce qui est un avantage important notamment lorsque ceux-ci sont des oeufs, la technique mise en oeuvre évitant, complémentairement, l'apport de produits chimiques comme des colles ou solvants et/ou l'utilisation de dispositifs mécaniques, comme des agrafes ou analogues.

Il en résulte un avantage appréciable sur le plan économique, tant eu égard à la diminution du coût de fabrication des embases et/ou couvercles qu'à celui du conditionnement des produits et qu'eu égard aux emplois de matières premières comme des agrafes, rubans adhésifs ou analogues.

Cet avantage économique est encore accru par le fait que l'épaisseur des matériaux mise en oeuvre peut être réduite par rapport à celle généralement envisagée, sans pour autant nuire à la protection des objets emballés, les emballages fabriqués selon l'invention étant en outre pratiquement exempts de rebuts, comme il en existe parfois dans la technique antérieure en raison de mauvais agrafages, de clipsages non satisfaisants du couvercle sur l'embase ou de déchirures lors de la mise en place relative des parties constitutives de l'emballage, l'une par rapport à l'autre.

De plus, l'utilisation d'une technique analogue à celle du soudage par ultrasons procure dans la zone d'assemblage une fixation qui ne peut être rompue sans laisser de traces, par exemple sous forme d'une pellicule du matériau constitutif de l'embase sur le couvercle, ou vice-versa, de sorte que l'on procure encore, par cette technique d'assemblage, la possibilité d'obtenir, entre autres, des témoins d'inviolabilité de l'emballage.

Une machine pour la fabrication d'un emballage perfectionné comprenant une embase et un couvercle en une matière thermoplastique et en un matériel cellulosique, est alors caractérisée en ce qu'elle comprend un générateur d'ultrasons, au moins une sonotrode et/ou une enclume ainsi que des moyens d'application à pression de la sonotrode sur l'enclume, la fréquence des ultrasons appliquée, la géométrie de la sonotrode et l'amplitude des vibrations permettant de provoquer le ramollissement de la matière thermoplastique et simultanément la migration de la matière ainsi ramollie dans certaines zones du matériau cellulosique lorsque la force d'appui de la sonotrode, le temps d'émission des ultrasons et le temps et la force d'appui de la sonotrode après l'émission desdits ultrasons sont réglés de manière appropriée.

Dans un mode d'exécution préféré dans lequel les emballages pour oeufs comprennent, solidaires de la première partie ou embase, des colonnes ou cheminées à sommet plat et un couvercle à fond plein, ledit couvercle est solidarisé de la première partie ou embase au droit desdites cheminées.

Dans un tel cas, la sonotrode et/ou l'enclume de la machine de fabrication de l'emballage est alors conformée pour pénétrer dans lesdites cheminées ou colonnes d'une part et, d'autre part, favoriser la migration de la matière thermoplastique ramollie dans le matériau cellulosique, avantageusement en présentant sur la ou leurs zones opératoires des points et/ou des stries rectilignes, transversales ou pyramidales, mais dont les sommets sont tronqués afin d'augmenter la surface de contact de l'enclume et/ou de la sonotrode avec les parties de l'emballage à assembler entre elles.

Une telle disposition favorise en outre l'obtention d'une bonne résistance à l'arrachement et au cisaillement en raison des "reliefs" créés à l'interface de la matière thermoplastique et du matériau cellulosique.

Dans une réalisation particulièrement préférée de la machine selon l'invention, celle-ci comprend un générateur à ultrasons dont la fréquence peut être réglée entre 20 et 40 kHz, l'amplitude de vibrations de la sonotrode pouvant être réglée quant à elle entre 20 et 50 µ , pour une durée d'émission des ultrasons comprise entre 0,2 et 1 seconde et une force d'appui réglable de la sonotrode inférieure à 50 kg/cm².

Etant donné que les machines de conditionnement d'oeufs font fréquemment application de barquettes à alvéoles en matière thermoplastique façonnées suivant une multiplicité de barquettes reliées entre elles, par exemple au nombre de quatre, l'invention prévoit, selon une autre caractéristique, que la machine fasse également application des ultrasons pour la séparation entre eux des emballages après pose des couvercles.

De façon caractéritique, on prévoit alors des moyens qui, simultanément à l'application des ultrasons permettent d'exercer une traction sur une partie des emballages formés pour provoquer la séparation d'emballages adjacents.

D'autres caractéristiques et avantages de l'invention apparaîtront de la description qui suit, faite à titre d'exemple et en référence aux dessins annexés dans lesquels :

- la figure 1 est une vue très schématique d'une partie de dispositif selon l'invention ;

- la figure 2 est une vue également très schématique illustrant l'application du procédé et d'un dispositif selon l'invention à la fabrication d'un emballage ;

- la figure 3 est une vue générale schématique d'ensemble d'une installation de conditionnement d'oeufs comportant une machine selon l'invention ;

- la figure 4 est une vue d'une partie constitutive de la machine de conditionnement d'oeufs selon l'invention ; et

- la figure 5 est une vue à 90° de celle de la figure 4.

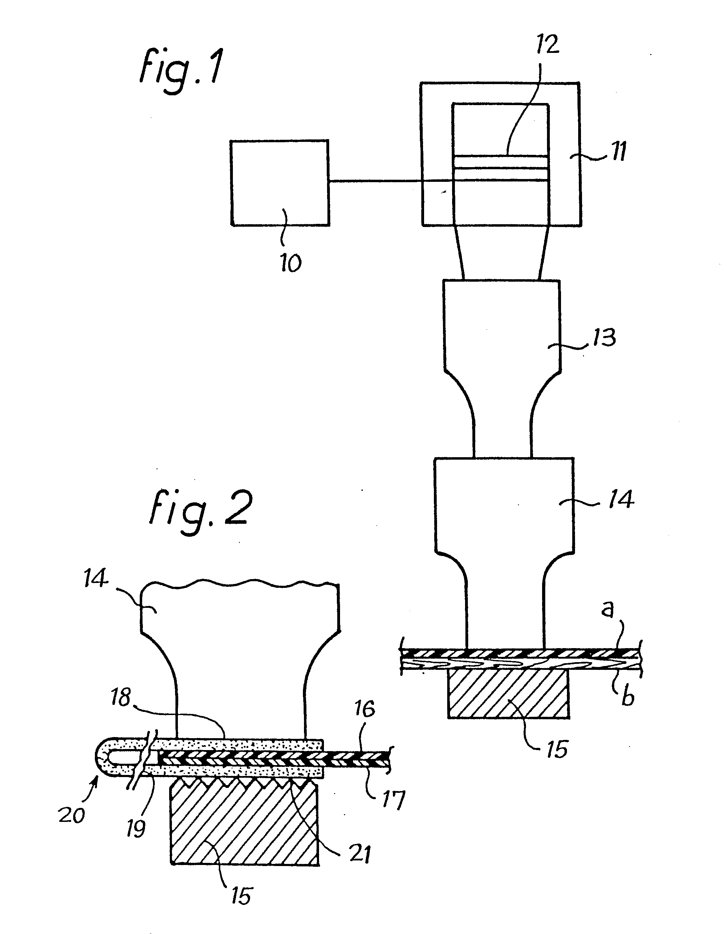

On se refère d'abord à la figure 1 qui illustre schématiquement la partie opératoire d'un dispositif d'assemblage par ultrasons selon l'invention.

Celui-ci comprend un générateur haute fréquence 10 relié à un convertisseur 11 à céramiques piézo 12, auquel fait suite un dispositif de modificateur d'amplitude 13 lequel porte la sonotrode 14 en regard de laquelle est disposée une enclume 15, les pièces à assembler entre elles étant montrées schématiquement en "a" et "b", entre la sonotrode 14 et ladite enclume.

Selon l'invention, on détermine la fréquence du générateur 10, la géométrie de la sonotrode 14 et/ou de l'enclume 15 et l'amplitude de vibrations de la sonotrode de manière à obtenir un assemblage satisfaisant des pièces a et b entre elles, même dans le cas où l'une est une matière thermoplastique et l'autre en un matériau du type cellulosique, comme du carton, due bois, du papier, une matière textile ou un "non-tissé", à base d'un tel matériau cellulosique.

Selon l'invention, la sonotrode et les organes qui lui sont associés sont choisis de manière telle que le coefficient d'amplification acoustique soit suffisant pour ramollir ou plastifier la matière thermoplastique à assembler sans, toutefois, que ce coefficient d'amplification soit trop élevé, pour ne pas dégrader ou "brûler" la matière thermoplastique ou le matériau cellulosique.

De bons résultats ont été obtenus, pour des fréquences du générateur 10 comprises entre 20 et 40 kHz avec une amplitude de vibrations de la sonotrode comprise entre 20 et 50 µ .

Pour l'obtention d'un assemblage satisfaisant, l'invention prévoit en outre de régler de manière adéquate les paramètres que constituent la force d'appui de la sonotrode 14 sur les matériaux à assembler, le temps d'émission des ultrasons ainsi que le temps et la force d'appui de la sonotrode 14 après émission desdits ultrasons.

De bons résultats ont été obtenus, à cet égard, avec un temps d'émission des ultrasons compris entre 0,2 et 1 seconde et une force d'appui de la sonotrode inférieure à 50 kg/cm², le temps d'appui de la sonotrode après émission des ultrasons sur les matériaux à assembler entre eux étant avantageusement compris entre 0,3 et 0,6 seconde.

Selon l'invention, également, la sonotrode 14 et/ou l'enclume 15 sont conformées, dans leurs zones opératoires, suivant des stries et/ou des pointes, les unes et/ou les autres tronquées afin d'augmenter la surface de contact avec les matériaux a et b à assembler entre eux, pour augmenter la surface de contact, d'une part et, d'autre part, favoriser une bonne résistance à l'arrachement et/ou au cisaillement par la création de zones en "reliefs" à l'interface des matériaux à assembler entre eux.

Le procédé et le dispositif de l'invention peuvent être mis en oeuvre en prévoyant d'appliquer la sonotrode 14 sur la matière thermoplastique et l'enclume au contact du matériau cellulosique.

En variante, on prévoit d'appliquer la sonotrode 14 au contact du matériau cellulosique et l'enclume 15 au contact de la matière thermoplastique.

Dans encore d'autres réalisations, qui trouvent application, notamment pour la réalisation d'emballages, la sonotrode 14 et l'enclume 15 sont toutes deux au contact de la matière thermoplastique sous forme de feuille ou film et un matériau cellulosique en feuille ou plaque, comme du carton, est interposé entre les deux couches de matière thermoplastique. En variante, une ou des feuille(s) de matière thermoplastique, comme 16 et 17, figure 2, sont interposées entre un ou deux flanc(s) en matériau cellulosique 18, 19, par exemple du carton, sous forme d'un cavalier 20 lequel est placé avec les feuilles de matière thermoplastique entre la sonotrode 14 et l'enclume 15 qui est représentée, schématiquement, avec des stries ou pointes 21.

Le procédé et le dispositif de l'invention trouvent ainsi application pour la solidarisation de feuilles, films ou analogues de matière thermoplastique ou de complexes comportant une telle matière avec des matériaux cellulosiques les plus variés comme du bois moulé, du vois déroulé, des produits à base de pulpe de cellulose moulée ou autrement formée, des produits du type des compounds cellulose/matière plastique (c'est-à-dire des matériaux dans lesquels la pulpe de matériau cellulosique est additionnée de fibres et/ou de poudres plastiques choisies pour être compatibles avec la matière thermoplastique à assembler audit compound), des textiles à base de matériau cellulosique, ou incorporant de tels matériaux sous forme de mélange avec des fibres synthétiques ou encore des produits "non-tissés" à base de tels matériaux ou qui comprennent de tels matériaux.

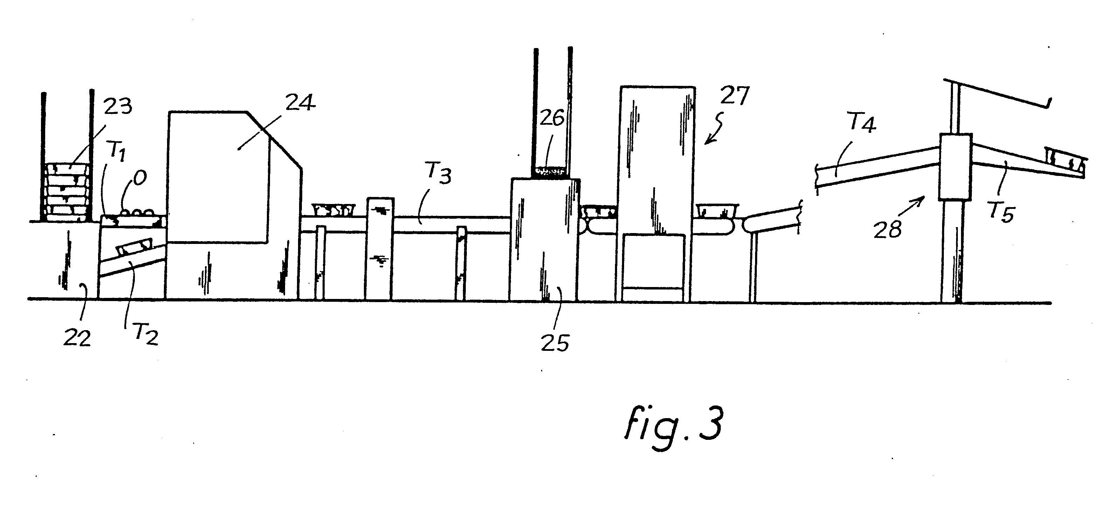

On se réfère ensuite à la figure 3 qui montre une installation de conditionnement d'oeufs équipée d'une machine selon l'invention. Dans cette installation, un poste 22 reçoit un empilage d'embases 23 qui, de façon connue en soi, sont conformées, généralement par moulage, pour présenter des alvéoles de réception des oeufs o, lesquels sont amenés, par example, à l'aide d'un transporteur T1, vers une machine 24 où ils sont mise en place dans les embases 23 quelque peu en forme de barquettes, également dirigées vers la machine 24 par un transporteur T2. A la sortie de la machine 24 un transporteur T3 amène les embases remplies 23 à une machine 25 de dépose de couvercles 26, les embases 23 ou barquettes ainsi garnies d'oeufs et garnies d'un couvercle 26 étant introduites dans une machine selon l'invention, 27, où ledit couvercle 26 est solidarisé de la barquette 23, les emballages ainsi formés étant amenés par un convoyeur T4 à un poste 28 d'étiquetage, comptage ou analogue dont la sortie T5 aboutit à des moyens d'expédition connus en soi.

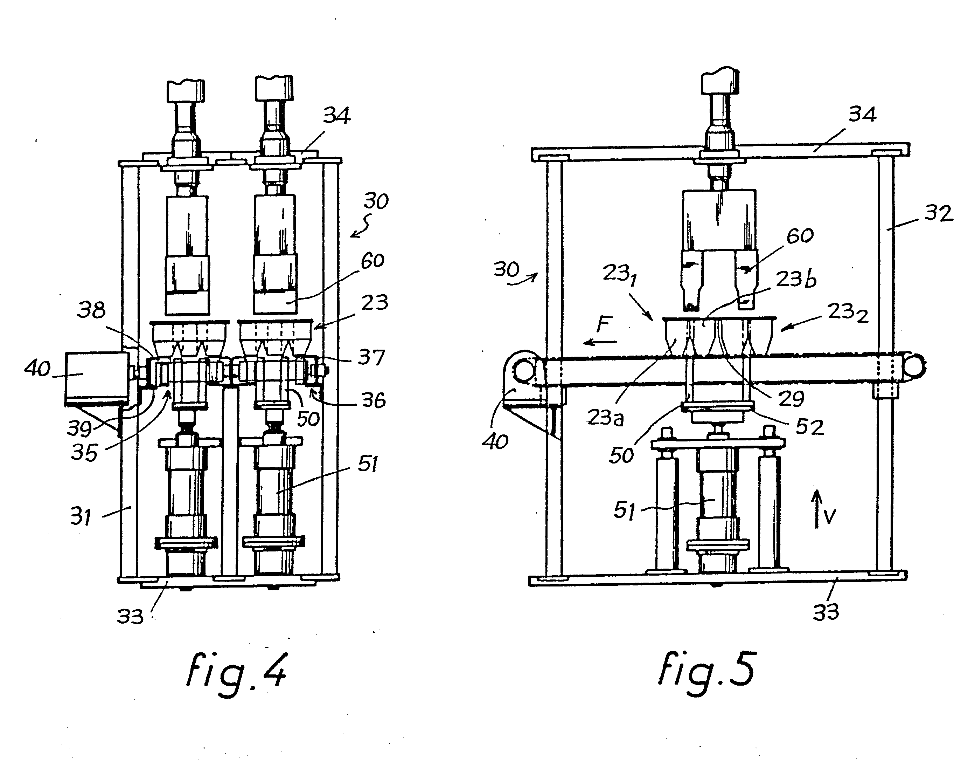

Selon l'invention, la solidarisation d'un couvercle 26 et d'une barquette 23 est réalisée par ultrasons, et cela quelle que soit la nature des matériaux constitutifs de ladite barquette 23 et du couvercle 26, par exemple une barquette en polystyrène et un couvercle en carton, ou une barquette en pulpe de papier et un couvercle en polystyrène, etc ... et également indépendamment de la forme des couvercles 26 et/ou embases 23. De façon connue en soi, celles-ci peuvent être comme montré sur les figures 4 et 5, c'est-à-dire prévues pour recevoir six oeufs ou un multiple de ce nombre, avec une disposition, à deux rangées 23a et 23b de trois oeufs chacune, dans le cas d'une barquette à six oeufs, les barquettes étant généralement approvisionnées non pas sous forme de barquettes individuelles, mais suivant un assemblage de quatre telles barquettes dont deux sont montrées en $23_1$ et $23_2$ sur la figure 5, les barquettes adjacentes étant reliées sur leurs bords par des pontets montrés schématiquement en 29 sur ladite figure 5 et comportant chacune par exemple comme montré sur EP-A3-0 079 757 ou EP-A3-0 085 559 des colonnes ou cheminées dont le sommet plein est soit sensiblement dans le plan de l'ouverture des barquettes, -qui sont alors fermées par un couvercle 26 sensiblement plat-, soit en saillie par rapport à ce plan, les barquettes étant alors fermées par un couvercle à fond plat et parois latérales tronconiques.

Comme montré sur les figures 4 et 5, la machine 27 selon l'invention comprend, dans un bâti 30 à montants 31 et 32, traverse horizontale inférieure 33 et traverse horizontale supérieure 34, deux transporteurs 35 et 36 défilant dans le sens de la flèche F, figure 5, et dont chacun est constitué par deux chaînes sans fin à éléments porteurs 37 en forme de U à ailes horizontales 38 et 39 et qui sont entraînés par un moteur 40. Les transporteurs ainsi constituées dont chacun comporte deux brins parallèles, figure 4, supportent ainsi les embases ou barquettes 23 par le fond de leurs alvéoles placés aux extrémités longitudinales, livrant, de la sorte, passage à des enclumes 50, figures 4 et 5, dont le nombre et la disposition correspondent à ceux d'un emballage ou d'une pluralité d'emballages. Les enclumes sont montrées à translation verticale, suivant la direction de la flèche V, par l'intermédiaire de vérins ou analogues 51 dont les cylindres sont fixés sur la traverse inférieure 33 et les tiges attelées à des plateaux comme 52 sur lesquels, sont fixées les enclumes 50. En regard de ces dernières, la machine 27 est munie de sonotrodes 60 dont le nombre et la disposition correspondent à ceux des enclumes, et qui sont elles aussi montées à translation suivant la direction de la flèche V ; c'est-à-dire verticalement, à partir de la traverse supérieure 34 et par des moyens de vérions (non représentés).

Aux sonotrodes 60 sont associées un ou des générateurs d'ultrasons, un convertisseur à céramiques pièzo et un modificateur d'amplitude ou "booster" (non représentés) lesquels peuvent être commandés et réglés pour, par un choix satisfaisant de la fréquence des ultrasons appliqués, de la géométrie de la sonotrode et de l'amplitude de vibrations, obtenir la solidarisation satisfaisante des couvercles 26 avec les cheminées ou colonnes que présentent les embases ou barquettes 23, avantageusement pour provoquer un ramollissement de la matière thermoplastique constituée d'une partie de l'emballage et une migration de celle-ci dans au moins certaines zones du matériau cellulosique constitutif d'une autre partie de l'emballage.

Pour l'obtention d'un assemblage satisfaisant du couvercle et de l'embase, la force d'appui des sonotrodes 60 sur les enclumes est réglée par l'aide des vérins comme 51, ainsi qu'à l'aide de ceux associés aux sonotrodes, de même qu'est réglé le temps d'émission des ultrasons, ainsi que le temps et la force d'appui de la sonotrode après l'émission desdits ultrasons.

Pour augmenter la surface de contact des enclumes 50 et/ou des sonotrodes 60 avec les embases ou couvercles à assembler entre eux, on prévoit que les enclumes et/ou les sonotrodes soient striées, ou munies de pointes, les sommets des stries ou des pointes étant tronqués afin d'augmenter les surfaces de contact relatives. Une telle disposition favorise en outre l'obtention d'une bonne résistance à l'arrachement et au cisaillement en raison des "reliefs" créés à l'interface des matières assemblées entre elles.

Les exemples qui suivent permettront, à cet égard, d'illustrer l'invention.

Exemple 1

On assemble à l'aide du procédé et du dispositif de l'invention une feuille de carton micro-cannelé et une feuille de polystyrène, l'ensemble ayant une épaisseur comprise entre 0,8 et 1,2 mm.

On procède à l'assemblage sur une zone annulaire, d'une aire comprise entre 140 et 200 mm² avec un générateur 10 réglé à 20 kHz.

Pour une amplitude de vibration de 50 µ, le temps d'émission d'ultrasons est de 0,3 seconde, le temps de maintien de la sonotrode après émission des ultrasons également de 0,3 seconde et la force d'appui de 80 kg.

Une solidarisation satisfaisante est obtenue avec une enclume de forme cylindrique striée et une sonotrode à face de travail plane.

Le remplacement de l'enclume par une enclume de même forme mais striée conduit également à de bons résultats.

On constate, sur un tel assemblage, que les matériaux réunis entre eux présentent une bonne résistance à l'arrachement et au cisaillement. Lorsque des forces suffisantes sont appliquées, et que les matériaux sont séparés, on constate que des traces de carton apparaissent sur le polystyrène, et vice-versa, de sorte que l'on peut ainsi former, pour certains emballages, des témoins d'inviolabilité d'un récipient ou analogue.

Exemple 2

Une feuille de polystyrène d'une épaisseur d'environ 0,3 mm est solidarisée avec une embase en pulpe de papier sur une surface cylindrique d'environ 50 mm². Le générateur 10 d'ultrasons est réglé à une fréquence d'environ 35 à 40 kHz et l'amplitude de vibrations est choisie sensiblement égale à 20-25 µ.

Pour un temps d'émission des ultrasons de 0,2 seconde, et un temps d'appui de la sonotrode après émission des ultrasons d'environ 0,3 seconde, de bons résultats sont obtenus pour une force d'application de la sonotrode comprise entre 6 et 10 kg.

Dans cette réalisation l'enclume cylindrique était munie de stries à pointes de diamant d'un pas de 2 mm, et tronquées sur une hauteur de 0,4 mm.

L'enclume 25 était au contact de la pulpe de papier et la sonotrode d'un diamètre de 8 mm au contact de la feuille de polystyrène.

Des résultats analogues à ceux obtenus dans l'exemple 1 ont été relevés.

Exemple 3

Pour la fabrication d'un sachet en film de polyéthylène d'une épaisseur de 100 à 150 µ, garni d'un cavalier de carton, on fait appel à une sonotrode plate dont l'amplitude de vibrations est réglée à environ 50 µ, pour une fréquence du générateur de 20 kHz.

Pour l'obtention d'une zone d'assemblage de 250 mm, et d'une surface d'environ 750 mm², on émet les ultrasons pendant 0,8 à 1 seconde, en exerçant une force d'appui de l'ordre de 100 à 120 kg, laquelle est maintenue de 0,4 à 0,5 seconde après émission des ultrasons.

Avec une enclume 15 striée au pas de 1,5 mm, les stries étant tronquées sur une épaisseur de 0,2 à 0,4 mm, on obtient en une seule opération le scellage parfait des deux lèvres du sachet que forment les films de polyéthylène l'un contre l'autre et une liaison simultanée au cavalier de carton, procurant ainsi un emballage particulièrement attractif, si on le compare aux dispositifs connus dans lesquels le cavalier de carton est agrafé ou collé sur un sachet préalablement fermé.

Exemple 4

Pour la réalisation d'une boîte à oeufs à embase en polystyrène présentant entre les six alvéoles de son embase, deux cheminées d'un diamètre de 13 mm et un couvercle en carton microcannelé, la machine 27 était équipée d'une sonotrode à face opératoire de travail plane, propre à coopérer avec des enclumes de forme cylindrique. La fréquence du générateur d'ultrasons étant réglée à 20 kHz, l'amplitude de vibrations des sonotrodes à 50 µ, de bons résultats ont été obtenus pour un temps d'émission d'ultrasons d'environ 0,3 seconde, un temps de maintien de la sonotrode après émission des ultrasons de 0,3 seconde également et une force de fermeture appliquée par les vérins d'environ 80 kg.

Les emballages obtenus à la sortie de la machine 27 sont d'excellente qualité tant en ce qui concerne la résistance à l'arrachement que celle au cisaillement. Lorsqu'une force suffisante est appliquée pour séparer le couvercle de l'embase des traces de carton apparaissent sur le polystyrène, et vice-versa, de sorte que l'on procure ainsi pour le consommateur des témoins d'inviolabilité de l'emballage.

Exemple 5

La machine selon l'invention a été mise en oeuvre pour la fabrication d'emballages pour oeufs comportant une embase ou barquette en pulpe de papier et un couvercle ou coiffe en polystyrène d'une épaisseur de 0,3 mm.

Pour la solidarisation du couvercle sur les cheminées de l'embase, la machine était munie de sonotrodes bi-cylindriques, d'un diamètre primaire de 20 mm et d'un diamètre secondaire de 8 mm, les enclumes cylindriques étant munies de stries à pointes de diamant au pas de 2 mm et tronquées sur une hauteur d'environ 0,4 mm.

Pour une fréquence du générateur d'ultrasons de 35 à 40 kHz, une amplitude de vibrations de la sonotrode de 20 à 25 μ, de bons résultats ont été obtenus par un temps d'émission d'ultrasons de 0,2 seconde, un temps de maintien de la sonotrode sur le couvercle en polystyrène de 0,3 seconde après émission des ultrasons, et une force de fermeture développée par les vérins de 6 à 20 kg.

Les résultats obtenus sont analogues à ceux de l'exemple 4, avec un assemblage de l'embase et de la coiffe sur des zones d'environ 50 mm² présentant une bonne résistance à l'arrachement et au cisaillement.

Dans cette réalisation, également, la séparation du couvercle et de l'embase après solidarisation laisse aparaître sur la coiffe de polystyrène des traces de pulpe, et vice-versa, de sorte qu'un obtient également des témoins d'inviolabilité de l'emballage.

Etant donné que les embases ou barquettes 23 sont fréquemment fabriquées par groupes de quatre embases pour six oeufs chacune, on prévoit d'associer à la machine 27 des moyens permettant de rompre les attaches, généralement sous forme de pontets qui relient les embases adjacentes après solidarisation des couvercles aux embases ou simultanément à cette solidarisation. Pour ce faire, on prévoit d'exercer une traction sur les boîtes à oeufs fermées concomitamment à l'application de la vibration ultrasonore ce qui provoque la rupture recherchée des pontets, et permet alors l'acheminement des boîtes à oeufs individuelles dans l'installation de conditionnement vers le poste 28 d'étiquetage, comptage ou analogue et ensuite, par la sortie T5, aux moyens d'expédition connus en soi.

l'invention n'est pas, bien entendu, limitée aux formes et réalisations décrites et représentées.

Elle peut, ainsi, être mise en oeuvre pour la fabrication d'emballages du type "blister" ou analogue.

Elle peut, aussi, avantageusement être mise en oeuvre pour la présentation d'échantillons comme des échantillons de textiles ou de "non-tissés" disposés entre deux coques de matière thermoplastique, ou une coque de matière thermoplastique et de matériau cellulosique comme du carton couché ou du carton micro-cannelé.

De même, l'invention peut être mise en oeuvre pour la réalisation d'assemblages du type ci-dessus comportant un ruban, en un matériau cellulosique textile, tissé ou non tissé, comme un bolduc ou une bande de carton.

**Revendications**

1. Procédé d'assemblage entre eux d'une matière thermoplastique et d'un matériau du type cellulosique, comme du carbon, du bois, du papier, des matières textiles tissées ou non-tissées ou des produits analogues, caractérisé en ce qu'on met en oeuvre les techniques de soudage par ultrasons de manière telle que l'on provoque non seulement un ramollissement de la matière thermoplasique à assembler mais également une migration de ladite matière dans au moins certaines zones du matériau cellulosique destiné à être réuni à ladite matière thermoplastique.

2. Procédé selon la revendication 1, caractérisé en ce que l'on continue à tenir appliqué l'un contre l'autre la matière thermoplastique et le matériau cellulosique après émision desdits ultrasons.

3. Procédé selon l'une quelconque des revendications précédentes, caractérisé en ce que l'on applique des ultrasons dont la fréquence est comprise entre 20 et 40 kHz, dont l'amplitude est entre 20 et 50 μ, pendant un temps d'émission compris entre 0,2 et 1 seconde, avec une pression d'appui inférieure à 50 kg/cm².

4. Procédé selon l'une quelconque des revendications précédentes, caractérisé en ce que l'on assemble chaque côté d'un matériau cellulosique constitué d'une bande de carton ou analogue, à une feuille de matière thermoplastique.

5. Procédé selon l'une quelconque des revendications 1 à 3, caractérisé en ce que l'on ensemble au moins une feuille de matière thermoplastique entre deux bandes de matériau cellulosique comme du carbon ou analogue.

6. Dispositif pour la mise en oeuvre du procédé selon l'une des revendications précédentes, caractérisé en ce qu'elle comprend une sonotrode (14), une enclume (15), ainsi qu'un générateur d'ultrasons (10) et des moyens d'application de la sonotrode (14) sur l'enclume (15) avec une force de pression prédéterminée, réglable, la sonotrode et l'enclume étant conformées et coopérant entre elles de manière telle qu'un réglage adéquat des paramètres de fonctionnement permet de provoquer un ramollissement et la matière thermoplastique et une migration de ladite matière dans au moins certaines zones du matériau cellulosique pour l'assemblage entre eux dudit matériau cellulosique et de ladite matière thermoplastique.

7. Dispositif selon la revendication 6, caractérisé en ce que la surface d'appui de l'un au moins des deux organes, sonotrode et enclume, comporte au moins un ensemble de stries parallèles.

8. Dispositif selon les revendications 6 ou 7 destiné à la fabrication d'un emballage pour oeufs ou produits analogues, caractérisé en ce qu'il comporte plusieurs enclumes de forme générale cylindrique destinées à pénétrer dans les cheminées des embases (23).

9. Emballage pour oeufs ou produits analogues du type comportant une première partie ou embase (23) munie d'alvéoles de réception des oeufs et un couvercle (26), caractérisé en ce que l'embase et le couvercle sont constitués de matériaux différents, l'un en une matière thermoplastique et l'autre en un matériau cellulosique, et en ce qu'ils sont solidarisés par une migration de ladite matière cellulosique dans au moins certaines zones du matériau cellulosique.

0269476

*fig.1*

*fig.2*

fig.3

0269476

fig.5

fig.4

# RAPPORT DE RECHERCHE EUROPEENNE

EP 87 40 2338

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | KUNSTSTOFFE, vol. 56, no. 6, juin 1966, pages 436-438; "Verbinden und Trennen von Kunststoffen mit Ultraschall" * En entier * | 1-8 | B 29 C 65/08 B 65 D 85/32 |
| X | DD-A- 235 046 (VEB BERGMANN-BORSIG) * En entier * | 1-9 | |
| X | FR-A-1 314 142 (INTERNATIONAL ULTRASONICS) * En entier * | 1-8 | |
| X | FR-A-1 264 171 (DOW CHEMICAL CO.) * Page 5, colonne de droite, paragraphe 1 * | 1-8 | |
| X | FR-A-2 455 502 (MECASONIC) * Revendications * | 1-8 | |
| X | FR-A-1 495 999 (COLE) * Résumé, points 1,3 * | 1-8 | |
| A | FR-A-2 026 836 (NOGUCHI) * En entier * | 8,9 | DOMAINES TECHNIQUES RECHERCHES (Int. Cl.4) B 29 C |
| A | DE-A-1 536 618 (KLEER-VU INDUSTRIES) * Page 4, lignes 10-12 * | 1-9 | |
| A | US-A-4 244 762 (SHELDOW HOLSON) * Résumé * | 1-9 | |

Le présent rapport a été établi pour toutes les revendications

| Lieu de la recherche | Date d'achèvement de la recherche | Examinateur |
|---|---|---|
| LA HAYE | 05-02-1988 | CORDENIER J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)